# EUROPÄISCHE PATENTANMELDUNG

(11) **EP 3 072 670 A1**
(43) Veröffentlichungstag der Anmeldung: **28.09.2016**
(21) Anmeldenummer: 15000892.8
(22) Anmeldetag: 26.03.2015
(51) Int. Cl.: B29C 67/00, B33Y 30/00

(54) **KLETTERDRUCKEINRICHTUNG SOWIE VERFAHREN ZUM 3D-DRUCKEN EINES WERKSTÜCKS**

(71) Anmelder: Linde Aktiengesellschaft, 80331 München (DE)
(72) Erfinder: Kanzler, Karlmann, 84504 Altötting (DE)
(74) Vertreter: Meilinger, Claudia Sabine

(57) **Zusammenfassung**

Die Erfindung betrifft eine Einrichtung (1) zum 3D-Drucken eines Werkstücks (4), mit: einem 3D-Druckkopf (2), der zum 3D-Drucken des Werkstücks (4) durch schichtweises Aufbauen des Werkstücks (4) eingerichtet ist, einer Führeinheit (10), wobei der 3D-Druckkopt (2) mit der Führeinheit (10) verbunden ist, und wobei die Führeinheit (10) dazu ausgebildet ist, den 3D-Druckkopf (2) relativ zum Werkstück (4) zu bewegen. Erfindungsgemäß ist vorgesehen, dass die Einrichtung (1) einen Tragrahmen (9) zum Tragen der Führeinheit (10) und des 3D-Druckkopfes (2) aufweist, wobei die Führeinheit (10) mit dem Tragrahmen (9) verbunden ist, und wobei die Einrichtung (1) ein mit dem Tragrahmen (9) verbundenes Vorschubmittel (6) aufweist, das dazu eingerichtet ist, die Einrichtung am Werkstück (4) entlang in vertikaler Richtung (z) nach oben zu bewegen, so dass die Gewichtskraft der Einrichtung (1) sämtlich über das Werkstück (4) in eine das Werkstück (4) tragende Unterlage (3) eingeleitet wird.

## Beschreibung

Die Erfindung betrifft eine Einrichtung sowie ein Verfahren zum 3D-Drucken von Werkstücken.

Im Stand der Technik sind verschiedene sog. 3D-Druckeinrichtungen beziehungsweise 3D-Druckverfahren bekannt, die jedoch bisher nur für kleine Vorrichtungen beziehungsweise Werkstücke geeignet sind. Beispielsweise ist ein selektives Schmelzverfahren bekannt, bei dem schichtweise Partikel in einem Druckbereich aufgeschichtet werden und selektiv die zu bildenden Strukturen durch Aufschmelzen der betreffenden Bereiche in dem gebildeten Partikelbad erzeugt werden. Werden die Druckwerkstücke sehr groß, müssen auch die Führungen und Arme für den Druckkopf sehr lang werden und unterliegen daher dem Einfluss von Vibrationen, Windkräften usw., die sich erheblich auf das Druckergebnis auswirken können.

Hiervon ausgehend liegt der vorliegenden Erfindung die Aufgabe zugrunde, eine Einrichtung sowie ein Verfahren zum 3D-Drucken zu schaffen, die die aus dem Stand der Technik bekannten Nachteile zumindest teilweise überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die erfindungsgemäße Aufgabe wird durch eine Einrichtung, auch als Kletterdruckeinrichtung bezeichnet, mit den Merkmalen des Anspruchs 1 gelöst.

Danach weist die erfindungsgemäße Einrichtung zum 3D-Drucken eines Werkstücks zumindest einen 3D-Druckkopf auf, der zum 3D-Drucken des Werkstücks durch schichtweises Aufbauen des Werkstücks eingerichtet ist, sowie eine Führeinheit, wobei der 3D-Druckkopf mit der Führeinheit verbunden ist, und wobei die Führeinheit dazu ausgebildet ist, den 3D-Druckkopf relativ zum Werkstück zu bewegen. Erfindungsgemäß ist weiterhin vorgesehen, dass die Einrichtung einen Tragrahmen zum Tragen der Führeinheit und des 3D-Druckkopfes aufweist, wobei die Führeinheit mit dem Tragrahmen verbunden ist, und wobei die Einrichtung ein mit dem Tragrahmen verbundenes Vorschubmittel aufweist, das dazu eingerichtet ist, die Einrichtung am Werkstück entlang in vertikaler Richtung nach oben zu bewegen, so dass die Gewichtskraft der Einrichtung sämtlich über das Werkstück in eine das Werkstück tragende Unterlage eingeleitet wird. Die Unterlage muss dabei kein gesondertes Element darstellen, sondern kann auch durch einen sonstigen Untergrund oder Fußboden gebildet werden.

Mit anderen Worten befähigt das Vorschubmittel also die Einrichtung dazu, an dem Werkstück in vertikaler Richtung empor zu klettern.

Die Einrichtung samt Führeinheit für den 3D-Druckkopf ist vorzugsweise dazu eingerichtet, an dem zu bildenden Werkstück zur Anlage gebracht bzw. festgelegt zu werden. Das heißt, die Einrichtung wandert mit dem Aufbau des Werkstücks der Höhe nach mit. Im Ergebnis kommt die Führeinheit ohne lange schwingungsanfällige Positionierungsarme auf, so dass die Präzision des 3D-Druckergebnisses gesteigert wird

Die Einrichtung erlaubt die Verwendung bekannter 3D-Druckköpfe. Vorzugsweise wird ein 3D-Druckkopf verwendet, der eine Schmelzvorrichtung aufweist bzw. mit dieser zusammenwirkt, mittels welcher Schmelzmaterial in einer beliebigen Position derart aufschmelzbar ist, dass sich das Schmelzmaterial mit dem bereits 3D-gedruckten Werkstück verbindet. Das Schmelzmaterial wird der Schmelzvorrichtung bevorzugt partikelförmig bereitgestellt. Besonders bevorzugt ist am 3D-Druckkopf zusätzlich eine separate Schmelzmaterialzufuhr vorgesehen, die mit der Schmelzvorrichtung an einem räumlich steuerbaren Arbeitspunkt zusammenwirkt, so dass das zugeführte Schmelzmaterial an dem Arbeitspunkt mit dem Werkstück schichtweise verbindbar ist. Zum Aufschmelzen weist der 3D-Druckkopf insbesondere einen Laser auf

Ein weiterer, vorzugsweise verwendeter 3D-Druckkopf ist ein 3D-Druckkopf, der Klebstoffpartikel, Zementpartikel oder mit klebenden Substanzen beschichtete Partikel schichtweise auf das Werkstück aufträgt. Der Klebstoff härtet dabei selbstständig oder durch Bestrahlung oder durch Begasung aus und verbindet sich schichtweise mit dem Werkstück.

Gemäß einer Ausführungsform der Erfindung ist vorgesehen, dass die Führeinheit dazu ausgebildet ist, den 3D-Druckkopf bezüglich des Tragrahmens dreidimensional im Raum zu positionieren, wobei insbesondere die Führeinheit drei miteinander verbundene Linearantriebe oder-module aufweist, um den 3D-Druckkopf bezüglich des Tragrahmens dreidimensional im Raum zu positionieren. Unter einem Linearantrieb oder Linearmodul wird vorliegend ein Antrieb verstanden, der dazu ausgebildet ist, eine lineare translatorische Bewegung zu erzeugen und insbesondere auch die hierzu notwendigen Führungselemente aufweist.

Die Linearantriebe sind bevorzugt so gekoppelt, dass der 3D-Druckkopf entlang dreier zueinander linear unabhängiger, insbesondere orthogonaler, Raumachsen x, y, z bewegbar ist. Weiterhin kann die Führeinheit eine Kombination aus translatorischen und rotatorischen Achsen aufweisen, um den 3D-Druckkopf bezüglich des Tragrahmens bzw. des Werkstücks dreidimensional im Raum zu positionieren (z.B. Roboterarm oder sonstige mehrachsige Manipulatorsysteme).

Gemäß einer Ausführungsform weist die Einrichtung mehrere 3D-Druckköpfe auf, die vorzugsweise jeweils mittels einer Führeinheit in der oben beschriebenen Weise positionierbar sind.

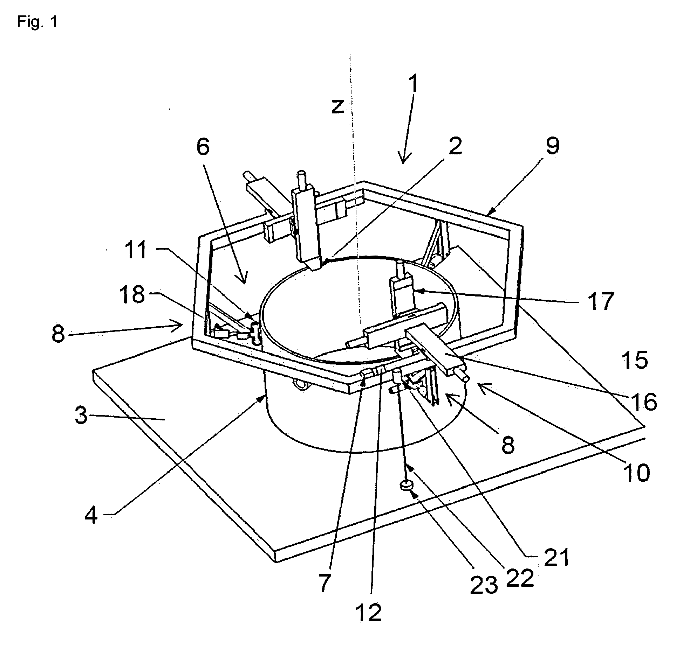

Gemäß einer weiteren Ausführungsform der Erfindung ist vorgesehen, dass der Tragrahmen z. B. ringförmig ausgebildet ist. Der Tragrahmen kann hierbei eine runde oder rechteckige oder auch mehreckige (z.B. hexagonale) Form aufweisen (vgl. Fig. 1). Weiterhin kann der Tragrahmen z. B. aus einem Stahl oder einer Aluminiumlegierung gefertigt sein. Der Tragrahmen kann aber auch eine oder mehrere Platten aufweisen bzw. hieraus gebildet sein, oder eine Konstruktion aus parallelen und rechtwinklig verbunden Trägerprofilen aufweisen, oder kann als ein Gitterrahmen ausgebildet sein. Sonstige Konstruktionen, die geeignet sind, eine starre Verbindung zwischen den Führeinheiten, den Vorschubeinheiten und den Messsystemen herzustellen, sind auch denkbar.

Gemäß einer weiteren Ausführungsform der Erfindung ist vorgesehen, dass die Einrichtung ein Positionsmessmittel umfasst, das dazu eingerichtet ist, die Position des Tragrahmens im Raum oder die Neigung des Tragrahmens (z. B. gegenüber der Horizontalen bzw. einer Ebene der Unterlage) zu bestimmen, wobei insbesondere das Positionsmessmittel einen oder mehrere Neigungssensoren und/oder einen oder mehrere Laser (oder andere optische Messaufnehmer) und/oder einen oder mehrere elektrische Messaufnehmer umfasst, anhand derer in bekannter Weise die Position des Tragrahmens bzw. der Einrichtung ermittelbar ist.

Gemäß einer weiteren Ausführungsform der Erfindung ist vorgesehen, dass die Einrichtung eine mit dem Positionsmessmittel zusammenwirkende Regel- oder Steuereinheit aufweist, die dazu konfiguriert ist, das Vorschubmittel bzw. die Vorschubeinheiten (siehe unten) so zu regeln oder anzusteuern, dass der Tragrahmen bei der Bewegung der Einrichtung nach oben am Werkstück entlang horizontal ausgerichtet wird.

Gemäß einer weiteren Ausführungsform der Erfindung ist vorgesehen, dass das Vorschubmittel zum Verschieben der Einrichtung in vertikaler Richtung drei oder mehrere Vorschubeinheiten aufweist, die in Umfangsrichtung des Tragrahmens bzw. des Werkstücks verteilt angeordnet sind (vorzugsweise äquidistant entlang der Umfangsrichtung). Dabei weist jede Vorschubeinheit eine Anpressvorrichtung auf, die insbesondere elektrisch, pneumatisch, hydraulisch und/oder mechanisch mittels eines geeigneten Aktuators betrieben wird, sowie je eine mit der jeweiligen Anpressvorrichtung gelenkig oder starr verbundene Antriebsvorrichtung, die ebenfalls jeweils über einen Aktuator verfügt, der die Bewegung der Einrichtung bzw. des Tragrahmens gegenüber dem Werkstück erzeugt.

Vorzugsweise ist die jeweilige Anpressvorrichtung dazu ausgebildet, die zugeordnete Antriebsvorrichtung gegen das Werkstück zu drücken, so dass insbesondere durch einen hiermit erzeugten Reibschluss oder Kraftschluss die Einrichtung mit zunehmender Höhe des Werkstücks am Werkstück entlang nach oben bewegbar ist, wenn die Antriebsvorrichtungen betätigt werden.

Gemäß einer weiteren Ausführungsform der Erfindung ist vorgesehen, dass die jeweilige Antriebsvorrichtung zumindest eine Raupe oder zumindest ein Rad oder ein Fahrwerk mit mehreren Räder aufweist, wobei diese Komponenten insbesondere elektrisch, pneumatisch oder hydraulisch mittels eines hierfür vorgesehenen Aktuators antreibbar sind. Vorzugsweise ist nun die der jeweiligen Antriebsvorrichtung zugeordnete Anpressvorrichtung dazu ausgebildet, die jeweilige Raupe oder das jeweilige Rad gehen das Werkstück zu pressen, so dass der besagte Reibschluss mit dem Werkstück hergestellt wird. Eine durch die jeweilige Antriebsvorrichtung bewirkte Drehbewegung der Raupe, des Rades oder des Fahrwerks erzeugt bzw. unterstützt dann die Bewegung der Einrichtung gegenüber dem Werkstück.

Gemäß einer weiteren Ausführungsform der Erfindung ist vorgesehen, dass die jeweilige Antriebsvorrichtung anstelle einer Raupe oder eines Rades ein Zahnrad aufweist, das mittels eines geeigneten Aktuators elektrisch, pneumatisch oder hydraulisch antreibbar ist, wobei hier die der jeweiligen Antriebsvorrichtung zugeordnete Anpressvorrichtung vorzugsweise dazu ausgebildet ist, das jeweilige Zahnrad in kämmenden Eingriff mit einer Zahnstruktur, insbesondere Zahnstange, zu bringen, so dass eine kraftschlüssige Kraftübertragung vom Zahnrad auf das Werkstück erfolgen kann. Die Zahnstruktur wird dabei mittels der Einrichtung beim 3D-Drucken des Werkstücks gebildet. Auf diese Weise führt eine durch die jeweilige Antriebsvorrichtung bewirkte Drehbewegung des jeweiligen Zahnrades zu der Bewegung der Einrichtung gegenüber dem Werkstück.

Grundsätzlich können die Vorschubeinheiten auch jeweils mehrspurig sowie insbesondere mit starrer, teilweise beweglicher, elastischer bzw. federnder oder kardanischer Aufhängung ausgeführt werden.

Gemäß einer weiteren Ausführungsform der Erfindung ist vorgesehen, dass die jeweilige Anpressvorrichtung zum Schwenken der Anpressvorrichtung in radialer Richtung nach innen (zum Werkstück hin) sowie in radialer Richtung nach außen (vom Werkstück weg) zwei Lenker aufweist, die jeweils an den Tragrahmen angelenkt sind (insbesondere an das Unterteil des Tragrahmens, siehe unten). Einer der Lenker kann dabei einen Aktuator bzw. Linearantrieb zum Verlängern oder Verkürzen des Lenkers entlang der Erstreckungsrichtung des Lenkers aufweisen, so dass das die oben beschriebene Schwenkbewegung erzeugt wird, mit der die Antriebsvorrichtung gegen das Werkstück gepresst werden kann.

Gemäß einer weiteren Ausführungsform der Erfindung ist vorgesehen, dass die jeweilige Anpressvorrichtung einen ersten Linearantrieb aufweist, der elektrisch, pneumatisch oder hydraulisch betrieben werden kann (z.B. Linearmodul), um die jeweils zugeordnete Antriebsvorrichtung entlang einer ersten Richtung gegen das Werkstück zu pressen.

Gemäß einer weiteren Ausführungsform der Erfindung ist vorgesehen, dass die jeweilige Anpressvorrichtung einen zweiten Linearantrieb aufweist, der wiederum elektrisch (z.B. Linearmodul), pneumatisch oder hydraulisch betrieben werden kann, wobei der zweite Linearantrieb mit dem ersten Linearantrieb verbunden ist, derart, dass die jeweils zugeordnete Antriebsvorrichtung zusätzlich in einer zweiten Richtung bewegbar ist die quer zur ersten Richtung verläuft, um zusätzliche Lageregelungsmaßnahmen hinsichtlich des Tragrahmens durchführen zu können.

Gemäß einer weiteren Ausführungsform der Erfindung ist vorgesehen, dass der Tragrahmen ein vorzugsweise ringförmiges Unterteil sowie ein vorzugsweise ringförmiges Oberteil aufweist, die im Druckbetrieb vorzugsweise in der horizontalen Ebene ringförmig umlaufend ausgebildet sind. Ober- und Unterteil sind vorzugsweise über ein ebenfalls bevorzugt ringförmiges Drehlager miteinander verbunden, so dass der gesamte Tragrahmen wiederum eine ringförmige Konfiguration aufweist und des Weiteren das Ober- und das Unterteil um eine vertikale Drehachse gegeneinander verdrehbar sind.

Das Vorschubmittel bzw. die einzelnen Vorschubeinheiten sind nunmehr bevorzugt am Unterteil des Tragrahmens festgelegt, wohingegen die mindestens eine Führeinheit zum Positionieren des 3D-Druckkopfes am Oberteil des Tragrahmens festgelegt ist.

Gemäß einer weiteren Ausführungsform der Erfindung ist vorgesehen, dass ein bzw. das Positionsmessmittel (siehe oben) dazu ausgebildet ist, eine Verdrehung des Oberteils des Tragrahmens (um eine vertikale Achse) bezüglich der Ebene der das Werkstück tragenden Unterlage zu messen.

Diesbezüglich ist weiterhin vorzugsweise vorgesehen, dass die Einrichtung einen Aktuator zum Drehen des Oberteils des Tragrahmens bezüglich des Unterteils aufweist, wobei eine bzw. die mit dem Positionsmessmittel zusammenwirkende Regeloder Steuereinheit (siehe auch oben) vorgesehen ist, die dazu konfiguriert ist, diesen Aktuator so zu regeln oder anzusteuern, dass eine mit dem Positionsmessmittel gemessene Verdrehung des Oberteils bezüglich der Ebene der Unterlage durch entsprechendes Drehen des Oberteils mittels des Aktuators reduziert wird, insbesondere ausgeglichen wird.

Die erfindungsgemäße Einrichtung kann in besonders vorteilhafter Weise zum Aufbauen von stehenden Behältern und Mänteln oder sonstigen Apparaten, Containern oder Bauwerken mit vergleichsweise hoher vertikaler Ausdehnung verwendet werden, da erfindungsgemäß die notwendigen (auskragenden) Armlängen und Führungselemente sehr kurz gehalten werden können. Dies wird erreicht, indem die Einrichtung dazu ausgebildet ist, sich am Werkstück entlang selbsttätig nach oben zu bewegen. Dabei können durch eine entsprechende Führung des mindestens einen 3D-Druckkopfs auch große Abweichungen des Querschnitts des Werkstücks von einer reinen Kreisform oder Ovalform erzeugt werden. Insbesondere sind Anschlüsse und Rippen an einer Außenwand des Werkstücks sowie Einbauten im Inneren des Werkstücks einstückig herstellbar. Ebenso sind auch vieleckige Querschnitte mit beliebigem 3D-druckbaren Innenausstattungen einstückig herstellbar. Soweit es die Verstellbarkeit des Vorschubmittels zulässt, kann sich auch die Außenform und Größe des Querschnitts entlang der z-Achse verändern.

Gemäß einem weiteren Aspekt der Erfindung wird ein Verfahren zum Herstellen bzw. 3D-Drucken eines Werkstücks vorgeschlagen, wobei
a) ein Werkstück mittels einer erfindungsgemäßen Einrichtung 3D-gedruckt wird, wobei das Werkstück in vertikaler Richtung mittels der Einrichtung schichtweise aus einem Material aufgebaut wird, und wobei
b) die Einrichtung in vertikaler Richtung am Werkstück entlang nach oben bewegt wird, wobei die Gewichtskraft der Einrichtung sämtlich über das Werkstück in eine das Werkstück tragende Unterlage eingeleitet wird.

Bei dem Material (auch als Druckmaterial bezeichnet) kann es sich um eines der folgenden Materialien handeln: ein schmelzbares Material, ein verklebbares Material, ein verklebbar festes Material, ein aushärtbares Material, ein aushärtbares flüssiges Material, ein aushärtbares zähflüssiges Material.

Weiterhin kann das Material durch mit Klebstoff beschichtete Partikel gebildet sein. Weiterhin kann das Material aus aushärtbaren Klebstoff- oder Zementpartikeln gebildet sein. Andere Druckmaterialien sind auch denkbar.

Anfangs kann ein dem Querschnitt des herzustellenden Werkstücks entsprechender Sockel verwendet werden, um ein anfängliches Anordnen und Positionieren der Einrichtung zu erleichtern. Die erfindungsgemäße Einrichtung ist vorzugsweise jedoch so ausgebildet, dass Sie beim 3D-Drucken der ersten Schicht des Werkstücks auf einer Unterlage des Werkstücks bzw. auf einem Untergrund ruhen kann (z.B. auf den Antriebsvorrichtungen).

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Es wird dargestellt in
- Fig. 1:: eine perspektivische Ansicht einer erfindungsgemäßen Einrichtung,
- Fig. 2:: eine Seitenansicht der Einrichtung gemäß Figur 1,
- Fig. 3:: eine Vorschubeinheit einer erfindungsgemäßen Einrichtung,
- Fig. 4:: eine Vorschubeinheit einer erfindungsgemäßen Einrichtung,
- Fig. 5:: eine Vorschubeinheit einer erfindungsgemäßen Einrichtung,
- Fig. 6:: eine ausschnitthafte Darstellung eine Vorschubeinheit einer erfindungsgemäßen Einrichtung, und
- Fig. 7: eine perspektivische Ansicht einer weiteren erfindungsgemäßen Einrichtung

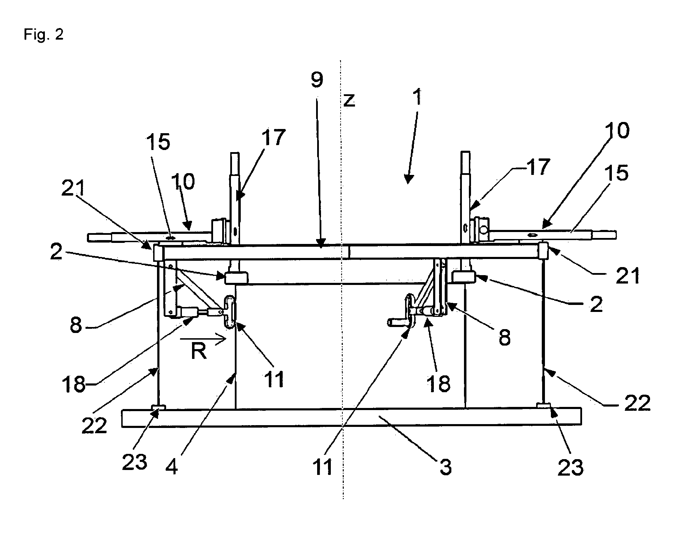

In Fig. 1 ist im Zusammenhang mit Fig. 2 eine erfindungsgemäße Einrichtung 1 gezeigt, die aufgrund ihrer Fähigkeit an einem durch die Einrichtung 1 3D-gedruckten Werkstück 4 empor fahren bzw. klettern zu können auch als Kletterdruckeinrichtung 1 bezeichnet wird.

Die Einrichtung 1 weist einen oder mehrere, vorliegend zwei, 3D-Druckköpfe 2 auf, die zum 3D-Drucken eines Werkstücks 4 konfiguriert sind, und zwar durch schichtweises Aufbauen des Werkstücks 4 aus einem schmelzbaren Material (siehe oben) in insbesondere vertikaler Richtung z. Bei dem zu druckenden Werkstück handelt es sich vorliegend ohne Beschränkung der Allgemeinheit um einen zylindrischen Mantel eines Behälters, z.B. einer Kolonne. Im Folgenden wird lediglich die Funktion eines 3D-Druckkopfes 2 beschrieben. Etwaige weitere 3D-Druckköpfe, wie z.B. der andere gezeigte 3D-Druckkopf 2, können wie dieser 3D-Druckkopf 2 eingerichtet sein und geführt werden.

Zum Positionieren des 3D-Druckkopfes 2 im dreidimensionalen (3D) Raum ist der 3D-Druckkopf 2 mit einer Führeinheit 10 verbunden, wobei die Führeinheit 10 dazu ausgebildet ist, den 3D-Druckkopf 2 relativ zum zu druckenden Werkstück 4 bzw. relativ zu einem bereits bestehenden bzw. 3D-gedruckten Abschnitt des Werkstücks 4 zu bewegen. Hierbei ist weiterhin vorgesehen, dass die Einrichtung 1 einen Tragrahmen 9 zum Tragen der Führeinheit 10 und des 3D-Druckkopfes 2 aufweist, wobei die Führeinheit 10 mit dem Tragrahmen 9 verbunden ist, und wobei die Einrichtung 1 ein mit dem Tragrahmen 9 verbundenes Vorschubmittel 6 aufweist, das dazu eingerichtet ist, die Einrichtung 1 am Werkstück 4 entlang in vertikaler Richtung z nach oben zu schieben, so dass die Gewichtskraft der Einrichtung 1 sämtlich über das Werkstück 4 in eine das Werkstück 4 tragende Unterlage 3 eingeleitet wird.

Die Führeinheit 10 ist weiterhin dazu ausgebildet, den 3D-Druckkopf 2 relativ zum Tragrahmen 9 dreidimensional im Raum zu positionieren. Hierzu kann die Führeinheit 10 z.B. drei miteinander verbundene Linearantriebe 15, 16, 17, insbesondere Linearmodule, aufweisen, die dazu konfiguriert sind, den 3D-Druckkopf 2 bezüglich des Tragrahmens 9 entlang dreier unabhängiger Raumachsen zu bewegen. Wie bereits erläutert, kann die Führeinheit 10 auch eine Kombination aus translatorischen und rotatorischen Achsen aufweisen, um den 3D-Druckkopf 2 bezüglich des Tragrahmens 9 dreidimensional im Raum zu positionieren (z.B. Roboterarm oder sonstige mehrachsige Manipulatorsysteme).

Wie in den Figuren 1 und 2 weiterhin gezeigt ist, ist der Tragrahmen 9 vorzugsweise ringförmig ausgebildet, wobei das zu druckende Werkstück 4 innerhalb des Tragrahmens 9 entsteht bzw. gedruckt wird und der Tragrahmen 9 radial weiter außen am Werkstück 4 angeordnet ist. Der Tragrahmen 9 kann dabei z.B. eine hexagonale Form aufweisen. Die Einrichtung 1 umgreift also gewissermaßen das Werkstück 4 und schiebt sich am Werkstück 4 entlang mit wachsender vertikaler Höhe des Werkstücks 4 nach oben. Der Tragrahmen 9 kann vorzugsweise auch aus einer oder mehreren Platten oder aus eine Konstruktion aus parallelen und rechtwinklig verbundenen Trägerprofilen gebildet sein. Weiterhin kann der Tragrahmen 9 ein Gitterrahmen sein oder eine sonstige Konstruktion, die geeignet ist, eine starre Verbindung zwischen den Führeinheiten, den Vorschubeinheiten und den Messsystemen herzustellen.

Gemäß Figuren 1 und 2 weist das Vorschubmittel 6 drei oder mehrere Vorschubeinheiten 8 auf, die je eine Anpressvorrichtung 18 aufweisen, die z.B. elektrisch, pneumatisch, hydraulisch und/oder mechanisch betrieben werden kann, sowie je eine mit der jeweiligen Anpressvorrichtung 18 gelenkig, federnd oder starr verbundene Antriebsvorrichtung 11. Die jeweilige Anpressvorrichtung 18 ist dazu eingerichtet und vorgesehen, die zugeordnete Antriebsvorrichtung 11 radial nach innen (entlang einer ersten Richtung R) gegen eine Außenseite des Werkstücks 4 zu pressen, so dass ein Reibschluss erzeugt wird, der es der Einrichtung 1 erlaubt, mit Hilfe der Antriebsvorrichtungen 11 bei zunehmender vertikale Höhe des Werkstücks 4 am Werkstück 4 nach oben zu fahren. Der Reibschluss garantiert dabei, dass die Einrichtung 1 mit ihrem gesamten Gewicht vom Werkstück 4 getragen wird und nicht etwa an diesem entlang nach unten rutscht.

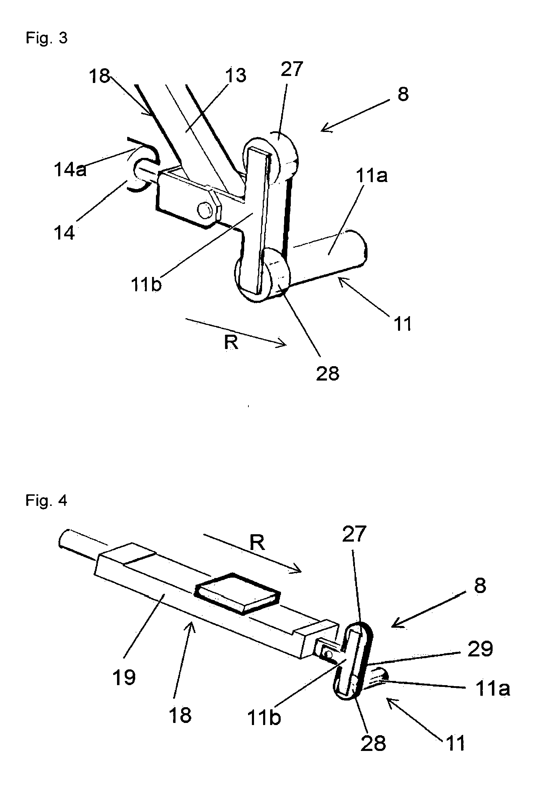

Die Figur 3 zeigt eine Vorschubeinheit 8 nach Art der Figuren 1 und 2 im Detail. Danach weist die Vorschubeinheit 8, wie bereits erläutert, eine Anpressvorrichtung 18 sowie eine Antriebsvorrichtung 11 auf. Wie auch in den Figuren 1 und 2 zu erkennen ist, weist die Vorschubeinheit 8, nämlich die Anpressvorrichtung 18, einen ersten und einen zweiten Lenker 13, 14 auf, die jeweils einen ersten und einen zweiten Endabschnitt aufweisen. Dabei sind die beiden Lenker 13, 14 über ihren jeweiligen ersten Endabschnitt an den Tragrahmen 9 angelenkt, wohingegen die Lenker 13, 14 über ihre zweiten Endabschnitte mit der Antriebsvorrichtung 11 verbunden sind, so dass bei einer Verlängerung des zweiten Lenkers 14 durch einen Aktuator 14a der Anpressvorrichtung (z.B. Linearantrieb) die Antriebsvorrichtung 11 entlang einer radialen ersten Richtung R auf das Werkstück 4 zu geschwenkt wird, und so dass bei einer Verkürzung des zweiten Lenkers 14 durch den Aktuator 14a die Antriebsvorrichtung 11 entgegen dieser radialen ersten Richtung R vom Werkstück 4 weg geschwenkt wird.

Die Antriebsvorrichtung 11 weist gemäß Figur 3 zwei an einer Halterung 11 b rotierbar gelagerte Räder 27, 28 auf, wobei jene Halterung 11 b mit den beiden Lenkern 13, 14 verbunden ist. In der Halterung 11 b können auch ein oder mehrere Räder rotierbar gelagert werden. In der vorliegenden Figur 3 ist eine spezielle Version mit 2 Rädern dargestellt, die nachfolgend ohne Beschränkung der Allgemeinheit beschrieben wird. Die beiden Räder 27, 28 können mittels der Anpressvorrichtung 18, nämlich durch Schwenken der Antriebsvorrichtung 11 in Richtung auf das Werkstück 4, gegen das Werkstück 4 gepresst werden, so dass ein Reibschluss zwischen den Rädern 27, 28 und dem Werkstück 4 erzeugt wird. Die weiteren Vorschubeinheiten 8, die vorzugsweise entlang der Umfangsrichtung des Tragrahmens 9 insbesondere äquidistant zu einander angeordnet sind, können ihre Antriebsvorrichtung 11 in der gleichen Weise gegen das Werkstück 4 drücken, so dass dieses zwischen den Antriebsvorrichtungen 11 bzw. Rädern 27, 28 eingeklemmt wird. In diesem Zustand wird bei Bedarf (nämlich wenn z.B. eine Schicht des Werkstücks 4 gedruckt worden ist und das Werkstück 4 entsprechend in vertikaler Richtung gewachsen ist) die Einrichtung 1 durch entsprechendes Rotieren der Räder 27, 28 am Werkstück 4 nach oben bewegt, wobei die Räder 27, 28 am Werkstück 4 abrollen. Es reicht aus, wenn pro Antriebsvorrichtung 11 eines der Räder (z.B. das jeweils untere Rad 28) z.B. durch einen Aktuator 11a angetrieben und in Rotation versetzt wird. Es können aber auch mehrere Räder angetrieben und in Rotation versetzt werden.

Anstelle der Lenkerkonfiguration gemäß Figuren 1 bis 3 kann auch eine Trapezlenkeroder Parallelogrammlenkerkonfiguration eingesetzt werden.

Die Figuren 4 bis 6 zeigen alternative Vorschubeinheiten 8, die ebenfalls bei einer Einrichtung nach Art der Figuren 1 und 2 (bzw. 7) anstelle der Vorschubeinheit 8 gemäß Figur 3 zum Einsatz kommen können.

Gemäß Figur 4 ist dabei vorgesehen, dass die Anpressvorrichtung 18 nicht mittels einer Lenkeranordnung realisiert wird, sondern mittels eines am Tragrahmen 9 festgelegten Linearantriebs 19 (z.B. Linearmodul), der dazu ausgebildet ist, die Antriebsvorrichtung 11 entlang einer radialen ersten Richtung R gegen das Werkstück 4 zu drücken. Hierbei kann die Antriebsvorrichtung 11 neben einem Aktuator 11 a entsprechend der Figur 3 wiederum ein Rad, zwei Räder 27, 28 oder mehrere Räder aufweisen oder alternativ, wie in der Figur 4 gezeigt, eine Raupe 29, die z.B. um mit einem Aktuator 11a antreibbare Räder 27, 28 herum gelegt ist, die die Raupe 29 bei Rotation in eine Bewegung versetzen. Wird die durch den Aktuator 11a antreibbare Raupe 29 in Reibschluss mit dem Werkstück 4 gebracht, wird wiederum eine Vortriebskraft für die Einrichtung 1 erzeugt, der zufolge sich die Einrichtung 1 am Werkstück 4 entlang in vertikaler Richtung z nach oben bewegt.

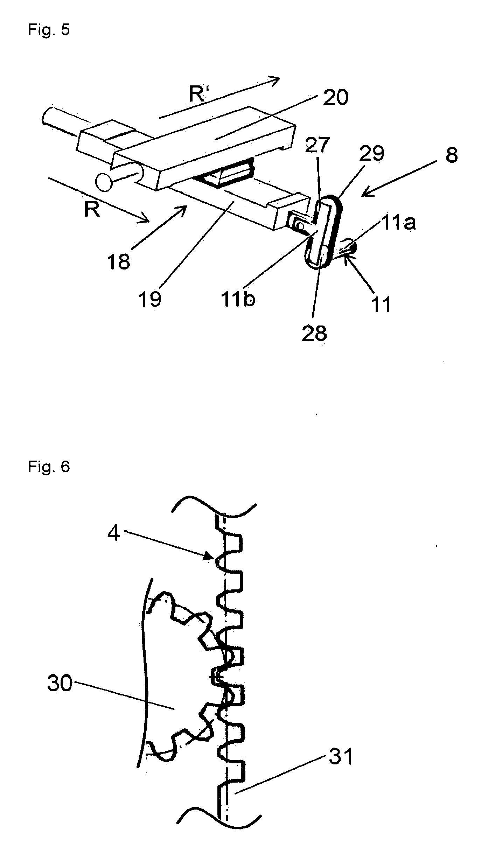

Gemäß Figur 5 kann die Vorschubeinheit 8 gemäß Figur 4 einen weiteren, zweiten Linearantrieb 20 aufweisen, der am Tragrahmen 9 festgelegt ist, wobei der erste Linearantrieb 19 über jenen zweiten Linearantrieb 20 mit dem Tragrahmen 9 gekoppelt ist. Mittels des zweiten Linearantriebs 20 kann dabei bevorzugt die Antriebsvorrichtung 11 quer zu einer radialen ersten Richtung R entlang einer zweiten Richtung R' bewegt werden, also insbesondere tangential zu einer Außenseite des Werkstücks 4, wodurch eine erweiterte Lageregelung des Tragrahmens 9 ermöglicht wird, die tangential zur Außenseite des Werkstücks 4 orientierte Bewegungsrichtungen beinhaltet.

Wie weiterhin in Figur 6 gezeigt ist, können die Vorschubeinheiten 8 jedoch auch kraftschlüssig an das Werkstück 4 gekoppelt werden. Gemäß einer Ausführungsform der Erfindung ist vorgesehen, dass die Antriebsvorrichtung 11 ein Zahnrad 30 aufweist, das dazu ausgebildet ist, mit einer vertikal am Werkstück 4 verlaufenden Zahnstruktur (z.B. Zahnstange) 31 zu kämmen. Das Zahnrad 30 kann dabei nach Art der Figuren 3 bis 5 mit einer Anpressvorrichtung 18 gekoppelt sein und mittels eines geeigneten Aktuators 11a angetrieben werden. Die Zahnstruktur 31 wird dabei beim 3D-Drucken des Werkstücks 4 an der Außenseite des Werkstücks 4 erzeugt. Durch Kämmen des Zahnrades 30 mit der Zahnstruktur 11 und Antreiben des Zahnrades 30 mittels eines geeigneten Aktuators 11a kann somit die Einrichtung 1 am Werkstück 4 emporklettern, wobei das Zahnrad mit der Zahnstruktur 31 kämmt.

Wie in den Figuren 1 und 2 gezeigt, weist die Einrichtung 1 weiterhin bevorzugt ein Positionsmessmittel auf, das dazu eingerichtet ist, die Position des Tragrahmens 9 im Raum und/oder die Neigung des Tragrahmens 9 gegenüber der Horizontalen zu bestimmen, wobei insbesondere das Positionsmessmittel einen

Neigungssensor 7 und/oder ein oder mehrere Wege- oder Lagemesssysteme (z. B. ein Lasersystem) 21 aufweisen kann. Beispielsweise kann pro Vorschubeinheit 8 ein zur jeweiligen Vorschubeinheit 8 benachbart am Tragrahmen 9 angeordneter Laser 21 vorgesehen sein, der einen Laserstrahl 22 erzeugt, der entlang der Vertikalen z nach unten auf einen Empfänger 23 oder einen Spiegel 23 gerichtet ist (für den Fall, dass unten an der Unterlage 3 ein Spiegel 23 vorgesehen ist befindet sich der Empfänger benachbart zum Laser 21 bei der Position des Lasers 21). Mittels der Laser 21 kann ebenfalls die Position bzw. Neigung des Tragrahmens 9 bezüglich der Ebene der Unterlage 3 in bekannter Weise gemessen werden, z.B. durch die Bestimmung von Laufzeitunterschieden des verwendeten Laserlichts oder durch sensorische Positionsmessung des Laserlichtpunkts am Empfänger.

Die Einrichtung 1 weist weiterhin bevorzugt eine mit dem Positionsmessmittel 7 bzw. 21, 22, 23 zusammenwirkende Regel- oder Steuereinheit 12 auf, die dazu konfiguriert ist, die einzelnen Vorschubeinheiten 8 bzw. deren Anpress- und Antriebsvorrichtungen 18, 11 so zu regeln oder anzusteuern, dass der Tragrahmen 9 bei der Bewegung der Einrichtung 1 nach oben (am Werkstück entlang) horizontal ausgerichtet wird, also insbesondere parallel zur Unterlage 3 am Werkstück 4 nach oben bewegbar ist.

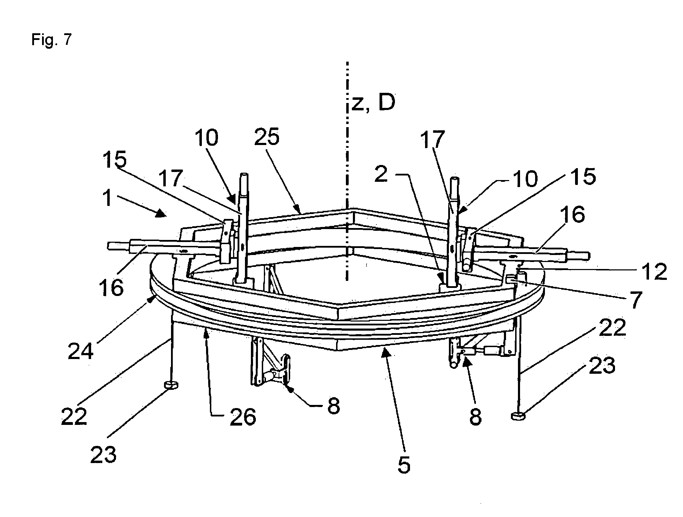

Figur 7 zeigt eine weitere Ausführungsform einer erfindungsgemäßen Einrichtung 1, die prinzipiell auch mit den Vorschubeinheiten 8 gemäß Figuren 3 bis 6 kombiniert werden kann. Die Einrichtung 1 weist im Unterschied zu den Figuren 1 und 2 nunmehr einen Tragrahmen 9 auf, der wiederum beispielsweise ringförmig ausgestaltet ist und zusätzlich ein Unterteil 26 sowie ein Oberteil 25 aufweist, wobei Unter- und Oberteil 26, 25 über ein Drehlager 24 miteinander verbunden sind, so dass das Ober- und das Unterteil 25, 26 um eine vertikale Drehachse D gegeneinander verdrehbar sind. Hierbei sind das Vorschubmittel 6 bzw. die Vorschubeinheiten 8 am Unterteil 26 festgelegt, wohingegen die mindestens eine Führeinheit10 am Oberteil 25 des Tragrahmens 9 festgelegt ist.

Das Positionsmessmittel 7 bzw. 21, 22, 23 ist nun vorzugsweise dazu konfiguriert ebenfalls eine Verdrehung des Oberteils 25 des Tragrahmens 9 um eine vertikale Achse D bezüglich der Ebene der das Werkstück 4 tragenden Unterlage 3 zu erfassen. Die Regel- oder Steuereinheit 12 wirkt mit dem Positionsmessmittel 7 bzw. 21, 22, 23 zusammen und steuert bzw. regelt einen Aktuator 5, mit dessen Hilfe das Oberteil 25 bezüglich des Unterteils 26 drehbar ist, derart an, dass einer mit dem Positionsmessmittel gemessenen Verdrehung des Oberteils 25 bezüglich der Ebene der Unterlage 3 entgegen gewirkt wird.

Die vorstehend beschriebenen Einrichtungen 1 eignen sich insbesondere zum 3D-Drucken von entlang der Vertikalen z vergleichsweise hohen Werkstücken 4, bei denen es sich insbesondere um Behälter, Kolonnen, Gebäude etc. handeln kann. Hierbei kann die Einrichtung 1 das Werkstück 4 Ebene für Ebene per 3D-Druck aufbauen, wobei sich die Einrichtung 1 in der Vertikalen z mit dem wachsenden Werkstück 4 mit bewegt. Hierbei kann die Einrichtung 1 am Werkstück 4 nach oben klettern und bedarf hierzu insbesondere keiner weiteren externen Hilfsmittel.

**Bezugszeichenliste**

| | |
|---|---|
| 1 | Kletterdruckeinrichtung |
| 2 | 3D-Druckkopf |
| 3 | Unterlage bzw. Untergrund |
| 4 | Werkstück |
| 5 | Aktuator |
| 6 | Vorschubmittel |
| 7 | Positionsmessmittel bzw. Neigungssensor |
| 8 | Vorschubeinheit |
| 9 | Tragrahmen |
| 10 | Führeinheit |
| 11 | Antriebsvorrichtung |
| 11a | Aktuator |
| 11b | Halterung |
| 12 | Regel- oder Steuereinheit |
| 13 | Lenker |
| 14 | Lenker |
| 14a | Aktuator |
| 15 | Linearantrieb |
| 16 | Linearantrieb |
| 17 | Linearantrieb |
| 18 | Anpressvorrichtung |
| 19 | Erster Linearantrieb |
| 20 | Zweiter Linearantrieb |
| 21 | Laser |
| 22 | Laserstrahl |
| 23 | Empfänger oder Spiegel |
| 24 | Drehlager |
| 25 | Oberteil |
| 26 | Unterteil |
| 27 | obere Rolle |
| 28 | untere Rolle |
| 29 | Raupe |
| 30 | Zahnrad |
| 31 | Zahnstruktur bzw. Zahnstange |
| D | Drehachse |
| R | Erste Richtung |
| R' | Zweite Richtung |
| Z | Vertikale |

## Patentansprüche

1. Einrichtung (1) zum 3D-Drucken eines Werkstücks (4), mit:
- einem 3D-Druckkopf (2), der zum 3D-Drucken des Werkstücks (4) durch schichtweises Aufbauen des Werkstücks (4) eingerichtet ist,
- einer Führeinheit (10), wobei der 3D-Druckkopf (2) mit der Führeinheit (10) verbunden ist, und wobei die Führeinheit (10) dazu ausgebildet ist, den 3D-Druckkopf (2) relativ zum Werkstück (4) zu bewegen,
**dadurch gekennzeichnet,**
**dass** die Einrichtung (1) einen Tragrahmen (9) zum Tragen der Führeinheit (10) und des 3D-Druckkopfes (2) aufweist, wobei die Führeinheit (11) mit dem Tragrahmen (9) verbunden ist, und wobei die Einrichtung (1) ein mit dem Tragrahmen (9) verbundenes Vorschubmittel (6) aufweist, das dazu eingerichtet ist, die Einrichtung (1) am Werkstück (4) entlang in vertikaler Richtung (z) nach oben zu bewegen, so dass die Gewichtskraft der Einrichtung (1) sämtlich über das Werkstück (4) in eine das Werkstück (4) tragende Unterlage (3) eingeleitet wird.

2. Einrichtung (1) nach Anspruch 1, **dadurch gekennzeichnet, dass** die Führeinheit (10) dazu ausgebildet ist, den 3D-Druckkopf (2) bezüglich des Tragrahmens (9) dreidimensional im Raum zu positionieren, wobei insbesondere die Führeinheit (10) drei miteinander verbundene Linearantriebe (15, 16, 17) aufweist, um den 3D-Druckkopf (2) bezüglich des Tragrahmens (9) dreidimensional im Raum zu positionieren.

3. Einrichtung (1) nach einem der vorhergehenden Ansprüche, **dadurch gekennzeichnet, dass** der Tragrahmen (9) ringförmig ausgebildet ist.

4. Einrichtung (1) nach einem der vorhergehenden Ansprüche, **dadurch gekennzeichnet, dass** die Einrichtung (1) ein Positionsmessmittel (7, 21) umfasst, dass dazu eingerichtet ist, die Position des Tragrahmens (9) im Raum und/oder die Neigung des Tragrahmens (9) zu bestimmen, wobei insbesondere das Positionsmessmittel (7, 21) eine oder mehrere Neigungsmesseinrichtungen (7) und/oder ein oder mehrere Wegmesssysteme, insbesondere in Form eines oder mehrerer Lasersysteme (21), umfasst.

5. Einrichtung nach Anspruch 4, **dadurch gekennzeichnet, dass** die Einrichtung (1) eine mit dem Positionsmessmittel (7, 21) zusammenwirkende Regel- oder Steuereinheit (12) aufweist, die dazu konfiguriert ist, das Vorschubmittel (6) so zu regeln oder anzusteuern, dass der Tragrahmen (9) bei der Bewegung der Einrichtung (1) nach oben horizontal oder parallel zu einer Unterlage (3) des Werkstücks (4) ausgerichtet wird,

6. Einrichtung nach einem der vorhergehenden Ansprüche, **dadurch gekennzeichnet, dass** das Vorschubmittel (6) drei oder mehrere Vorschubeinheiten (8) aufweist, die je eine Anpressvorrichtung (18) aufweisen sowie je eine mit der jeweiligen Anpressvorrichtung (18) gelenkig, federnd oder starr verbundene Antriebsvorrichtung (11), wobei die jeweilige Anpressvorrichtung (18) dazu ausgebildet ist, die zugeordnete Antriebsvorrichtung (11) gegen das Werkstück (4) zu pressen, so dass insbesondere durch einen hiermit erzeugten Reibschluss oder Kraftschluss die Einrichtung (1) mit zunehmender Höhe des Werkstücks (4) am Werkstück (4) nach oben bewegbar ist.

7. Einrichtung nach Anspruch 6, **dadurch gekennzeichnet, dass** die jeweilige Antriebsvorrichtung (11) zumindest eine Raupe (29) oder zumindest ein Rad (28) aufweist, wobei die der jeweiligen Antriebsvorrichtung (11) zugeordnete Anpressvorrichtung (18) dazu ausgebildet ist die jeweilige mindestens eine Raupe (29) oder das jeweilige mindestens eine Rad (28) gegen das Werkstück (4) zu pressen, um einen Reibschluss mit dem Werkstück (4) herzustellen, so dass eine durch die jeweilige Antriebsvorrichtung (11) bewirkte Drehbewegung der mindestens einen Raupe (29) oder des mindestens einen Rades (28) die Bewegung der Einrichtung (1) gegenüber dem Werkstück (4) erzeugt.

8. Einrichtung nach Anspruch 6, **dadurch gekennzeichnet, dass** die jeweilige Antriebsvorrichtung (11) ein Zahnrad (30) aufweist, wobei die der jeweiligen Antriebsvorrichtung (11) zugeordnete Anpressvorrichtung (18) dazu ausgebildet ist, das jeweilige Zahnrad (30) in kämmenden Eingriff mit einer Zahnstruktur (31), insbesondere Zahnstange, zu bringen, die insbesondere mittels der Einrichtung (1) beim 3D-Drucken des Werkstücks (4) geschaffen wird, so dass eine durch die jeweilige Antriebsvorrichtung (11) bewirkte Drehbewegung des Zahnrades (30) die Bewegung der Einrichtung (1) gegenüber dem Werkstück (4) erzeugt.

9. Einrichtung nach einem der Ansprüche 6 bis 8, **dadurch gekennzeichnet, dass** die jeweilige Anpressvorrichtung (18) zum Schwenken der Anpressvorrichtung (18) nach innen zum Werkstück (4) hin sowie nach außen vom Werkstück (4) weg zwei Lenker (13, 14) aufweist, die jeweils an den Tragrahmen (9) angelenkt sind.

10. Einrichtung nach einem der Ansprüche 6 bis 8, **dadurch gekennzeichnet, dass** die jeweilige Anpressvorrichtung (18) einen ersten Linearantrieb (19) aufweist, um die jeweils zugeordnete Antriebsvorrichtung (18) entlang einer ersten Richtung (R) gegen das Werkstück (4) zu pressen.

11. Einrichtung nach Anspruch 10, **dadurch gekennzeichnet, dass** die jeweilige Anpressvorrichtung (18) einen zweiten Linearantrieb (20) aufweist, der mit dem ersten Linearantrieb (19) verbunden ist, wobei der zweite Linearantrieb (20) dazu ausgebildet ist die jeweils zugeordnete Antriebsvorrichtung (11) in einer zweiten Richtung (R') zu bewegen, die quer zur ersten Richtung (R) verläuft.

12. Einrichtung nach einem der vorhergehenden Ansprüche, **dadurch gekennzeichnet, dass** der Tragrahmen (9) ein Unterteil (26) sowie ein Oberteil (25) aufweist, die über ein Drehlager (24) miteinander verbunden sind, so dass Ober- und Unterteil (25, 26) um eine vertikale Drehachse gegeneinander verdrehbar sind, wobei insbesondere das Vorschubmittel (6), insbesondere die Vorschubeinheiten (8), am Unterteil (26) festgelegt sind, und wobei die Führeinheit (10) am Oberteil (25) festgelegt ist.

13. Einrichtung nach Anspruch 12, **dadurch gekennzeichnet, dass** ein Positionsmessmittel (7, 21) vorgesehen ist, das dazu ausgebildet ist, eine Verdrehung des Oberteils (25) des Tragrahmens (9) um eine vertikale Achse bezüglich der Ebene der das Werkstück (4) tragenden Unterlage (3) zu messen.

14. Einrichtung nach den Ansprüchen 12 und 13, **dadurch gekennzeichnet, dass** die Einrichtung (1) einen Aktuator (5) zum Drehen des Oberteils (25) des Tragrahmens (9) bezüglich des Unterteils (26) aufweist, wobei eine mit dem Positionsmessmittel (7, 21) zusammenwirkende Regel- oder Steuereinheit (12) vorgesehen ist, die dazu konfiguriert ist, den Aktuator (5) so zu regeln oder anzusteuern, dass eine mit dem Positionsmessmittel gemessene Verdrehung des Oberteils (25) bezüglich der Ebene der Unterlage (3) durch entsprechendes Drehen des Oberteils (25) mittels des Aktuators (5) reduziert wird.

15. Verfahren zum Herstellen eines Werkstücks (4) unter Verwendung einer Einrichtung nach einem der vorhergehenden Ansprüche, wobei
c) ein Werkstück mittels der Einrichtung (1) 3D-gedruckt wird, wobei das Werkstück (4) in vertikaler Richtung (z) schichtweise aus einem Material aufgebaut wird, und wobei
d) die Einrichtung (1) in vertikaler Richtung (z) am Werkstück (4) entlang nach oben bewegt wird, wobei die Gewichtskraft der Einrichtung (1) sämtlich über das Werkstück (4) in eine das Werkstück (4) tragende Unterlage (3) eingeleitet wird.
